# EUROPÄISCHE PATENTSCHRIFT

(11) **EP 1 342 996 B1**
(45) Veröffentlichungstag und Bekanntmachung des Hinweises auf die Patenterteilung: **21.05.2014**
(21) Anmeldenummer: 03000929.4
(22) Anmeldetag: 16.01.2003
(51) Int. Cl.: F16K 11/074, F16L 41/00, G01F 15/00, G01F 15/18

(54) **Ventilzähler-Anschlussstück**
Valve meter connector
Connexion pour compteur d'eau

(30) Priorität: 09.03.2002 DE 20203850 U
(43) Veröffentlichungstag der Anmeldung: 10.09.2003
(73) Patentinhaber: Techem Energy Services GmbH, 65760 Eschborn (DE)
(72) Erfinder: Leblang, Lars, Dipl.-Ing., 64287 Darmstadt (DE)
(74) Vertreter: Keil & Schaafhausen Patent- und Rechtsanwälte

(56) Entgegenhaltungen:
- DE-A1- 4 139 815
- GB-A- 2 242 007
- US-A- 5 316 042

## Beschreibung

Die vorliegende Erfindung betrifft ein Ventilzähler-Anschlussstück mit einem zwei voneinander getrennte Strömungskanäle beinhaltenden Stutzen, der an einem ersten Ende Anschlusselemente zur Verbindung mit einem in einer Zufluss- und einer Abflussleitung in Verbindung stehenden, zwei Kanäle beinhaltenden Ventiladapter aufweist und an einem weiteren Ende um eine gemeinsame Achse relativ zueinander drehbar und axial unverschiebbar mit einer Messkapselaufnahme verbunden ist, die wiederum Anschlusselemente zur Verbindung mit einer Messkapsel und deren Zufluss- und Abflussleitung aufweist.

Ein Ventilzähler-Anschlussstück ist ein Absperrorgan, das auf den Ventilsitz des Rohrleitungsabsperrventils montiert wird und gleichzeitig als Aufnahme eines Wohnungswasserzähler ausgebildet ist. Dabei ersetzt das Ventilzähler-Anschlussstück die Ventilabsperrung und muss das Absperren der Rohrleitung zu den Zapfstellen der Wohnung gewährleisten, die Zu- und Abfuhr des Wassers zu bzw. von dem Wasserzähler sicherstellen und gleichzeitig den Wasserzähler selbst aufnehmen. Diese Funktionen werden bei herkömmlichen Ventilzählern durch separate Bauteile gewährleistet, die in ihrer Gesamtheit das Anschlussstück bilden. Derartige Ventilzähler-Anschlussstücke sind bspw. aus der DE 296 20 461 U1 und der DE 298 00 726 U1 bekannt.

Bei diesen bekannten Ventilzähler-Anschlussstücken ist üblicherweise eine konzentrische Strömungsführung im Anschlussstutzen vorgesehen. Die Absperrung erfolgt mittels einer Drehspindel und einem Handrad, so dass ein Dichtelement fest auf das innenliegende Ventilrohr gepresst wird. Bauartbedingt befinden sich die Längsachsen dieser Absperrvorrichtung und des Ventilrohres in einer Flucht. Da sich die Achse der Aufnahme des Wasserzählers im rechten Winkel zu der Längsachse oder parallel versetzt dazu befindet, wird die Strömung bei diesen bekannten Ventilzähler-Anschlussstücken wenigstens einmal im rechten Winkel zu dem Zähler hin und von dem Zähler weg geführt. Durch diese mehrfache Strömungsumlenkung wird ein Rohrdruckverlust vor und nach dem Wasserzähler geschaffen. Der Druck an den Zapfstellen ist dadurch häufig stark vermindert, was insbesondere den Einsatz von Druckspülern unmöglich macht. Zudem bringt diese Bauweise mit voneinander getrennten Stutzen, Absperrungen und Messkapselaufnahmen bedingt durch den Materialaufwand ein hohes Gewicht des Ventilzähler-Anschlussstückes mit sich, wodurch die Gefahr einer Schädigung der Gewinde am Ventilsitz der Rohrleitung oder am Stutzen des Ventilzähler-Anschlussstückes aufgrund hoher Biegemomente entsteht. Weiter erfordert diese Bauweise einen großen Bauraum aus der Wand heraus und rechtwinklig zur Seite sowie hohe Material- und Montagekosten.

Aus der EP 0 327 972 B1 ist eine kombinierte Absperrventil- und Durchflussmesseinrichtung für die Wasserversorgung bekannt, die im Fußboden oder Fundament von Gebäuden einsetzbar ist. Diese Einrichtung umfasst einen über Vorsprünge drehfest in einer Hülse gehaltenen Ventilkörper, in den eine Zufluss- und eine Abflussleitung münden. Ein ebenfalls mit zwei Leitungsabschnitten ausgestatteter Einsatz ist in dem Ventilkörper drehbar gehalten. Durch eine Verdrehung des als Aufnahme für die Messkapsel dienenden Einsatzes relativ zu dem Ventilkörper werden die Leitungsabschnitte in dem Einsatz und die Zufluss- und Abflussleitungen in dem Ventilkörper zur Absperrung eines Volumenstromes außer Deckung gebracht. Der Aufbau dieser Einrichtung ist jedoch kompliziert und erfordert einen hohen Fertigungs- und Montageaufwand. Das Absperren des Flüssigkeitsstromes kann nur über ein gesondertes, in die Hülse einführbares Werkzeug erfolgen. Zudem können zwischen dem Einsatz und dem Ventilkörper Leckagen auftreten.

Die Offenlegungsschrift DE 41 39 815 A1 beschreibt ein Umschaltventil mit einer Überströmkammer und zwei zum Öffnen bzw. Verschließen des Ventils vorgesehenen, drehbar koaxial aufeinanderliegenden Lochscheiben. Dabei ist eine der Lochscheiben drehfest mit einem Gehäuse und die andere Lochscheibe drehfest mit einem darin angeordneten und über ein Rändelrad gegenüber dem Gehäuse drehbaren Mitnehmer verbunden. Ein- und Auslassöffnung des Umschaltventils sind so nebeneinander angeordnet, dass sie jeweils einem Loch der benachbarten Lochscheibe gegenüberstehen.

Eine ähnliche Ventilanordnung mit zwei gegeneinander verdrehbaren Lochscheiben geht aus der Patentschrift US 5,316,042 hervor.

Ein Ventil mit einer Überströmkammer und einer einzigen Lochscheibendichtung ist aus dem Dokument GB 2 242 007 A bekannt. Die Lochscheibendichtung ist dabei so angeordnet, dass zwei darin angeordnete Löcher in einer Öffnungsstellung einen Leitungsquerschnitt jeweils einer Einlass- bzw. Auslassleitung freigeben und in einer Schließstellung blockieren.

Demgegenüber liegt der vorliegenden Erfindung die Aufgabe zugrunde, ein kompaktes Ventilzähler-Anschlussstück bereitzustellen, das sich durch eine einfache Konstruktion und eine verbesserten Strömungsverlauf auszeichnet.

Diese Aufgabe wird bei einem Ventilzähler-Anschlussstück der eingangs genannten Art durch ein Ventilzähler-Anschlussstück mit den Merkmalen des Anspruches 1 gelöst. Durch ein Verdrehen der Messkapselaufnahme relativ zu dem Stutzen werden auch die in der Messkapselaufnahme bzw. dem Stutzen drehfest gehaltenen Lochscheiben relativ zueinander verdreht. Die in einer geöffneten Stellung des Ventilzähler-Anschlussstückes übereinanderliegenden Durchflussöffnungen der Lochscheiben werden auf diese Weise außer Deckung gebracht, so dass ein Flüssigkeitsstrom durch das Ventilzähler-Anschlussstück durch die Verdrehung der Messkapselaufnahme relativ zu dem Stutzen abgesperrt wird. Die Messkapselaufnahme dient damit nicht nur zur Verbindung mit einer Messkapsel, sondern gleichzeitig auch als Absperrorgan des Flüssigkeitsstromes. Dies ermöglicht eine besonders kompakte Konstruktion des Ventilzähler-Anschlussstückes, wodurch auch Material- und Herstellungskosten reduziert werden können.

Erfindungsgemäß ist vorgesehen, dass in dem Stutzen ein mit einer der Durchflussöffnungen der ersten Lochscheibe und mit den ersten Anschlusselementen des ersten Endes des Stutzens verbundenes gekrümmtes Ventilrohr verläuft. Diese Ausgestaltung des Ventilrohres ermöglicht eine koaxiale Zuführung von zwei Kanälen von dem Ventiladapter zu dem Ventilzähler-Anschlussstück und eine Ausleitung der Flüssigkeitsströme aus dem Stutzen durch die nebeneinanderliegenden Durchflussöffnungen der ersten Lochscheibe. Dabei bildet das Ventilrohr einen der beiden voneinander getrennten Strömungskanäle, während der Stutzen selbst den durch das Ventilrohr von dem ersten Strömungskanal getrennten zweiten Strömungskanal bildet. Dieser Konstruktionsaufbau ist mit minimalem Material- und Fertigungsaufwand realisierbar und senkt dadurch die Herstellungskosten des Ventilzähler-Anschlussstückes.

Der Druckverlust in dem Ventilzähler-Anschlussstück kann auf ein Minimum reduziert werden, indem die Strömung lediglich in dem Ventilrohr, vorzugsweise um ca. 2 x 20°, umgelenkt wird. Eine mit hohen Druckverlusten verbundene Strömungsumlenkung um 90° oder mehr vor Eintritt in die Messkapsel kann bei gleichzeitig vereinfachter Konstruktion vermieden werden. Vielmehr verläuft der durch das Ventilrohr gebildete Strömungskanal in dem Ventilzähler-Anschlussstück mit geringst möglicher Strömungsumlenkung.

Es wird bevorzugt, dass die beiden Lochscheiben aus einem Keramikwerkstoff bestehen oder die einander zugewandten Flächen der Lochscheiben mit einer Keramikbeschichtung versehen sind. Der Einsatz von Keramik auf zumindest den einander zugewandten Flächen der Lochscheiben ermöglicht eine hervorragende Dichtungswirkung der aufeinanderliegenden Lochscheiben. Es ist daher nicht notwendig, in den Lochscheiben zusätzliche Nuten vorzusehen, in die Dichtungsringe oder ähnliches eingebracht werden. Der Fertigungsaufwand ist auf diese Weise minimierbar. Zudem bietet Keramik besonders gute Verschleißeigenschaften, so dass durch diesen Aufbau der Lochscheiben nicht nur eine verbesserte Dichtwirkung erzielt wird, sondern auch die Langlebigkeit des Ventilzähler-Anschlussstückes.

Die Handhabung des Ventilzähler-Anschlussstückes beim Absperren oder Öffnen der Rohrleitungen kann dadurch erleichtert werden, dass an der Außenseite der Messkapselaufnahme eine Profilierung zum Eingriff eines Werkzeugs und/oder zum manuellen Ergreifen der Messkapselaufnahme vorgesehen ist. Ein zusätzliches Handrad oder ähnliches zum Absperren der Rohrleitungen kann auf diese Weise entfallen.

Vorzugsweise ist die Profilierung auf einem ringförmigen Vorsprung an der Außenseite der Messkapselaufnahme angebracht, der einen größeren Durchmesser als der Stutzen aufweist. Der ringförmige Vorsprung erleichtert dabei nicht nur den Angriff eines Werkzeuges oder das manuelle Ergreifen der Messkapselaufnahme sondern dient durch seinen größeren Durchmesser aufgrund der Hebelwirkung einer besonders leichtgängigen Betätigbarkeit des Ventilzähler-Anschlussstückes.

In Weiterbildung dieses Gedankens sind an dem Stutzen und der Messkapselaufnahme vorzugsweise Vorsprünge vorgesehen, die eine relative Verdrehung des Stutzens zu der Messkapselaufnahme auf etwa 90° begrenzen. Diese Vorsprünge dienen somit als Anschläge, die sicherstellen, dass die Durchflussöffnungen der Lochscheiben in einer ersten Anschlagstellung im Wesentlichen deckungsgleich übereinander liegen und in der zweiten, zu der ersten um 90° versetzten Anschlagstellung vollständig außer Deckung gebracht sind. So kann ein sicheres Absperren und Öffnen des Durchflusses ermöglicht werden.

Ist die Messkapselaufnahme drehbar in dem Stutzen aufgenommen und mittels eines Sprengringes axial unverschiebbar in diesem gehalten, werden die erfindungsgemäßen Funktionen der Messkapselaufnahme konstruktiv besonders einfach und mit geringem Herstellungsaufwand realisiert.

Im Folgenden wird nun eine Ausführungsform der Erfindung beispielhaft und unter Bezugnahme auf die beigefügte Zeichnung näher erläutert.

Es zeigen:
- Fig. 1: eine Seitenansicht des Ventilzähler-Anschlussstückes ohne Messkapsel,
- Fig. 2: eine perspektivische Ansicht des Ventilzähler-Anschlussstückes nach Fig. 1,
- Fig. 3: einen Schnitt durch das Ventilzähler-Anschlussstück nach Fig. 1 entlang der Linie A-A mit Messkapsel und Ventiladapter,
- Fig. 4: einen Strömungsführungseinsatz in perspektivischer Ansicht und
- Fig. 5: eine Lochscheibe in perspektivischer Ansicht.

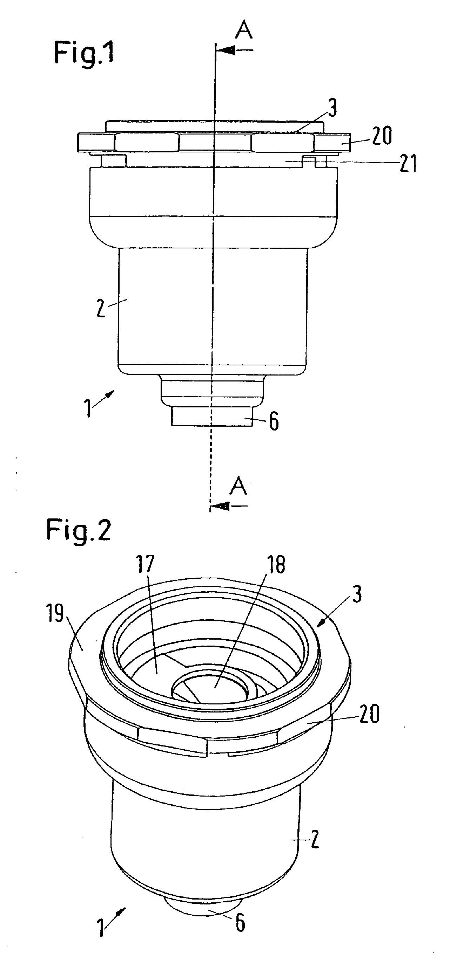

In den Figuren 1 bis 3 ist in unterschiedlichen Ansichten ein Ventilzähler-Anschlussstück 1 dargestellt, das im Wesentlichen aus einem Stutzen 2 und einer Messkapselaufnahme 3 besteht. Das Ventilzähler-Anschlussstück 1 ist über den Stutzen 2 mit einem Ventiladapter 4 und über die Messkapselaufnahme 3 mit einer Messkapsel 5 verbindbar.

Der Stutzen 2 ist ein im Wesentlichen topfförmiges Bauteil, an dessen erstem, in den Figuren unteren Ende eine Öffnung 6 vorgesehen ist. In die Öffnung 6 des Stutzens 2 mündet ein gekrümmtes Ventilrohr 7, das einen ersten Strömungskanal 8 definiert, der gegenüber dem einen zweiten Strömungskanal 9 bildenden Innenraum des Stutzens 2 abgedichtet ist. Im Bereich der Öffnung 6 des Stutzens 2 sind Anschlusselemente zur Verbindung mit zwei koaxialen Kanälen des Ventiladapters 4 vorgesehen, die in das Ventilrohr 7 bzw. die Öffnung 6 eingreifen.

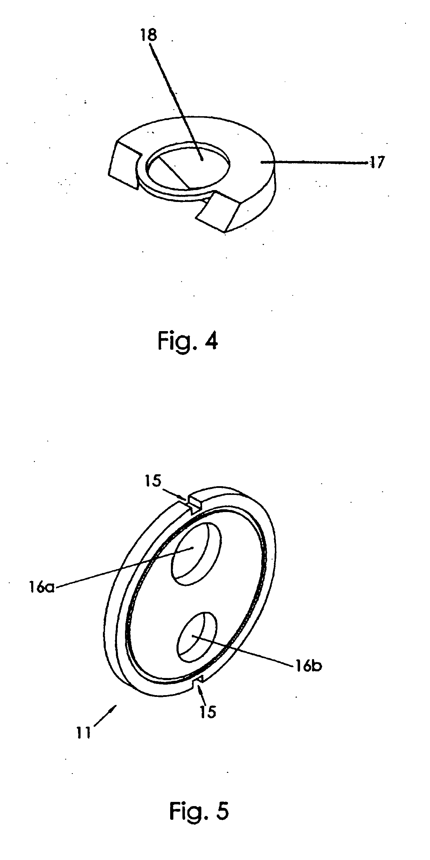

Die Messkapselaufnahme 3 ist in den Stutzen 2 eingesetzt und in diesem über einen Sprengring 10, der in entsprechenden Nuten in dem Stutzen 2 und der Messkapselaufnahme 3 sitzt, drehbar und axial unverschiebbar gehalten. In kreisscheibenförmigen Ausnehmungen des Stutzens 2 und der Messkapselaufnahme 3 sind jeweils eine Lochscheibe 11 bzw. 12 aufgenommen. Wie in der Darstellung von Fig. 5 erkennbar, weist jede der Lochscheiben auf einer ihrer Seiten eine ringförmige Nut auf, in die ein Dichtungsring 13 bzw. 14 eingelegt ist. Jede der Lochscheiben weist an ihrem Außenumfang zwei Nuten 15 auf, die mit entsprechenden Vorsprüngen in dem Stutzen 2 bzw. der Messkapselaufnahme 3 in Eingriff stehen, so dass die Lochscheiben 11 und 12 drehfest in dem Stutzen bzw. der Messkapselaufnahme gehalten sind.

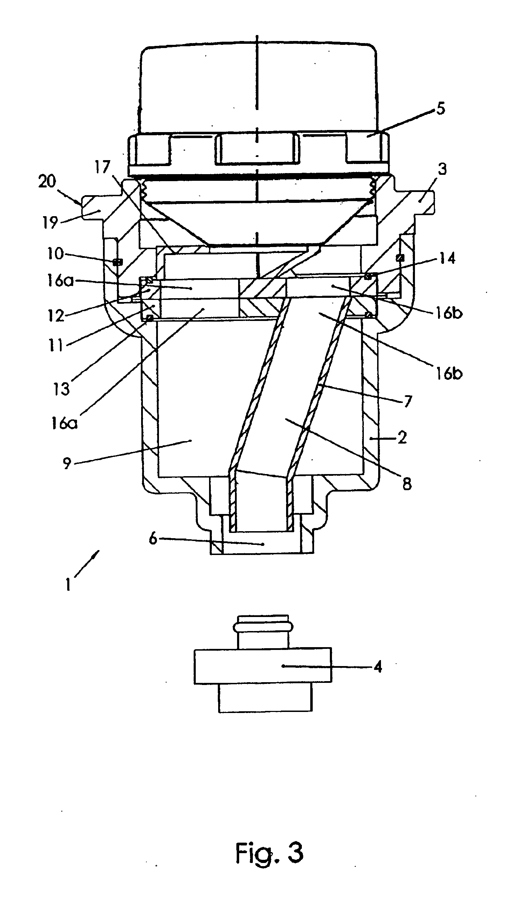

Die beiden Lochscheiben 11, 12 weisen jeweils zwei Durchflussöffnungen 16a, 16b auf, die in der Darstellung von Fig. 3 deckungsgleich übereinanderliegen. In eine der Durchflussöffnungen 16b der in dem Stutzen 2 gehaltenen Lochscheibe 11 mündet das Ventilrohr 7 und wird dort vorzugsweise durch eine geschraubte oder geklebte Verbindung gehalten. Das Ventilrohr 7 lenkt die Strömung zwischen dem Anschluss des Ventiladapters 4 und der Lochscheibe 11 zweimal um jeweils etwa 20° um, so dass die am Ventiladapter 4 koaxial geführten Strömungskanäle 8 und 9 in der Lochscheibe 11 parallel verlaufen.

Weiter ist in der Messkapselaufnahme 3 anliegend an die Lochscheibe 12 ein Strömungsführungseinsatz 17 vorgesehen, der in Fig. 4 separat dargestellt ist. Der Strömungsführungseinsatz 17 leitet die Strömung aus dem Ventilrohr 7 durch die Durchflussöffnungen 16b der Lochscheiben 11 und 12 der Außenseite der Messkapsel 5 zu, während eine Strömung aus der Messkapsel 5 heraus durch die Öffnung 18 in dem Strömungsführungseinsatz 17 durch die Durchflussöffnungen 16a der Lochscheiben 12 und 11 in den im Inneren des Stutzens 2 gebildeten Strömungskanal 9 geleitet wird.

An der Außenseite der Messkapselaufnahme 3 ist ein ringförmiger Vorsprung 19 vorgesehen, der eine Profilierung 20 aufweist. An der Unterseite des ringförmigen Vorsprunges 19 der Messkapselaufnahme 3 und auf der der Messkapsel 3 zugewandten Seite des Stutzens 2 sind jeweils Vorsprünge 21 ausgebildet.

Im Folgenden wird nun die Funktionsweise des Ventilzähler-Anschlussstückes 1 näher erläutert.

Das Ventilzähler-Anschlussstück 1 dient einerseits dazu, der Messkapsel 5 aus einer Zuflussleitung Wasser zuzuführen, dessen Menge in der Messkapsel 5 gemessen wird, und dieses Wasser durch eine Abflussleitung von der Messkapsel 5 wegzuführen. Gleichzeitig soll das Ventilzähler-Anschlussstück 1 eine Absperrung der Strömung zwischen der Zufluss- und der Abflussleitung ermöglichen.

Das aus dem Ventiladapter 4 dem Ventilzähler-Anschlussstück 1 zugeleitete Wasser wird zunächst durch das Ventilrohr 7 und die Durchflussöffnungen 16b der Lochscheiben 11 und 12 und weiter durch den Strömungsführungseinsatz 17 der Messkapsel 5 zugeleitet. Durch eine zentrale Öffnung in der Messkapsel 5 gelangt das Wasser durch den Strömungsführungseinsatz 17 und die Durchflussöffnungen 16a der Lochscheiben 12 und 11 in den Strömungskanal 9, der im Inneren des Stutzens 2 ausgebildet ist. Von dort wird das Wasser zurück in den Ventiladapter 4 geleitet.

In dem in Fig. 3 dargestellten Zustand des Ventilzähler-Anschlussstückes 1 liegen die Durchflussöffnungen 16a bzw. 16b der Lochscheiben 11 und 12 deckungsgleich übereinander. Das Ventilzähler-Anschlussstück befindet sich daher in seiner geöffneten Stellung. Um das Ventilzähler-Anschlussstück 1 in seine abgesperrte Stellung zu überführen, ist es notwendig, die Messkapselaufnahme 3 relativ zu dem Stutzen 2 um ihre gemeinsame Achse zu verdrehen. Bei einer Drehung um etwa 90° werden die Durchflussöffnungen 16a und 16b der Lochscheiben 11 und 12 außer Deckung gebracht, so dass eine Strömung durch die Lochscheiben 11 und 12 unterbunden wird. Die Lochscheiben 11 und 12 liegen dabei dichtend aufeinander.

Die Verdrehung der Messkapselaufnahme 3 relativ zu dem Stutzen 2 kann über ein an der Profilierung 20 des ringförmigen Vorsprunges 19 der Messkapselaufnahme 3 angreifendes Werkzeug oder manuell erfolgen. Die Vorsprünge 21 an der Messkapselaufnahme 3 und dem Stutzen 2 ermöglichen dabei eine definierte Drehung der Messkapselaufnahme 3 relativ zu dem Stutzen 2 um etwa 90°, wenn die Vorsprünge 21 als Anschläge dienen.

Die Lochscheiben 11 und 12 können dabei aus einem Keramikmaterial bestehen oder auf ihren einander zugewandten Flächen mit Keramik beschichtet sein, um die Dichtwirkung zu erhöhen.

### Bezugszeichenliste:

- 1: Ventilzähler-Anschlussstück
- 2: Stutzen
- 3: Messkapselaufnahme
- 4: Ventiladapter
- 5: Messkapsel
- 6: Öffnung
- 7: Ventilrohr
- 8: Strömungskanal
- 9: Strömungskanal
- 10: Sprengring
- 11: Lochscheibe
- 12: Lochscheibe
- 13: Dichtungsring
- 14: Dichtungsring
- 15: Nut
- 16: Durchflussöffnung
- 17: Strömungsführungseinsatz
- 18: Öffnung
- 19: ringförmiger Vorsprung
- 20: Profilierung
- 21: Vorsprung

## Patentansprüche

1. Ventilzähler-Anschlussstück mit einem zwei voneinander getrennte Strömungskanäle (8, 9) beinhaltenden Stutzen (2), der an einem ersten Ende Anschlusselemente zur Verbindung mit einem Ventiladapter (4), welcher mit einer Zufluss- und einer Abflussleitung in Verbindung steht und zwei Kanäle beinhaltet, aufweist und an einem weiteren Ende um eine gemeinsame Achse relativ zueinander drehbar und axial unverschiebbar mit einer Messkapselaufnahme (3) verbunden ist, die wiederum Anschlusselemente zur Verbindung mit einer Messkapsel (5) und deren Zufluss- und Abflussleitung aufweist, wobei in dem Stutzen (2) drehfest und abgedichtet eine der Messkapselaufnahme (3) zugewandte erste Lochscheibe (11) mit wenigstens zwei Durchflussöffnungen (16a, 16b) aufgenommen ist und in der Messkapselaufnahme (3) drehfest und abgedichtet eine dem Stutzen (2) zugewandte zweite Lochscheibe (12) mit wenigstens zwei Durchflussöffnungen (16a, 16b) so aufgenommen ist, dass die beiden Lochscheiben (11, 12) koaxial und dichtend aufeinanderliegen, wobei in dem Stutzen (2) ein mit einer der Durchflussöffnungen (16b) der ersten Lochscheibe (11) und mit den ersten Anschlusselementen des ersten Endes des Stutzens (2) verbundenes gekrümmtes Ventilrohr (7) verläuft, wobei der Stutzen (2) an dem ersten Ende eine Öffnung (6) aufweist, in welche das gekrümmte Ventilrohr (7) mündet, das den ersten Strömungskanal (8) der zwei voneinander getrennten Strömungskanäle (8,9) definiert, und wobei der Innenraum des Stutzen (2) den zweiten Strömungskanal (9) der zwei voneinander getrennten Strömungskanäle (8,9) bildet.

2. Ventilzähler-Anschlussstück nach Anspruch 1, **dadurch gekennzeichnet, dass** die Strömung bis zum Eintritt in die Messkapsel (5) um weniger als 90° umgelenkt wird, im Ventilrohr (7) vorzugsweise zweimal um ca. 20°.

3. Ventilzähler-Anschlussstück nach einem der vorangegangenen Ansprüche, **dadurch gekennzeichnet, dass** die beiden Lochscheiben (11, 12) aus einem Keramikwerkstoff bestehen oder die einander zugewandten Flächen der Lochscheiben (11, 12) mit einer Keramikbeschichtung versehen sind.

4. Ventilzähler-Anschlussstück nach einem der vorangegangenen Ansprüche, **dadurch gekennzeichnet, dass** an der Außenseite der Messkapselaufnahme (3) eine Profilierung (20) zum Eingriff eines Werkzeugs und/oder zum manuellen Ergreifen der Messkapselaufnahme vorgesehen ist.

5. Ventilzähler-Anschlussstück nach Anspruch 4, **dadurch gekennzeichnet, dass** die Profilierung (20) auf einem ringförmigen Vorsprung (19) an der Außenseite der Messkapselaufnahme (3) angebracht ist, der einen größeren Durchmesser als der Stutzen (2) aufweist.

6. Ventilzähler-Anschlussstück nach einem der vorangegangenen Ansprüche, **dadurch gekennzeichnet, dass** an dem Stutzen (2) und der Messkapselaufnahme (3) Vorsprünge (21) vorgesehen sind, die eine relative Verdrehung des Stutzens (2) zu der Messkapselaufnahme (3) auf etwa 90° begrenzen.

7. Ventilzähler-Anschlussstück nach einem der vorangegangenen Ansprüche, **dadurch gekennzeichnet, dass** die Messkapselaufnahme (3) drehbar in dem Stutzen (2) aufgenommen und mittels eines Sprengringes (10) axial unverschiebbar in diesem gehalten ist.

## Claims

1. A valve meter connector comprising a connecting piece (2) which contains two flow channels (8, 9) that are separated from each other, and which, at a first end, has connecting elements for connecting to a valve adapter (4) that is in communication with an inflow line and an outflow line and contains two channels, and which, at another end, is connected to a measuring capsule receptacle (3) and is rotatable relative thereto about a common axis in an axially non-displaceable manner, said measuring capsule receptacle, in turn, having connecting elements for connecting to a measuring capsule (5) and to the inflow and outflow lines thereof, wherein a first perforated disk (11) having at least two flow openings (16a, 16b) and facing towards the measuring capsule receptacle (3) is accommodated in a rotationally fixed and sealed manner in the connecting piece (2), and a second perforated disk (12) having at least two flow openings (16a, 16b) and facing towards the connecting piece (2) is accommodated in a rotationally fixed and sealed manner in the measuring capsule receptacle (3) such that the two perforated disks (11, 12) lie coaxially and sealingly on top of each other, wherein a curved valve tube (7) extends in the connecting piece (2), which valve tube is connected to one of the flow openings (16b) of the first perforated disk (11) and to the first connecting elements of the first end of the connecting piece (2), wherein the connecting piece (2) has at the first end an opening (6) in which the curved valve tube (7) ends that defines the first flow channel (8) of the two flow channels (8,9) which are separated from each other, and wherein the interior of the connecting piece (2) forms the second flow channel (9) of the two flow channels (8, 9) which are separated from each other.

2. The valve meter connector according to claim 1, **characterized in that** the flow is deflected up to the entrance into the measuring capsule (5) by less than 90º, in the valve tube (7) preferably twice by approximately 20º.

3. The valve meter connector according to any one of the preceding claims, **characterized in that** the two perforated disks (11, 12) consist of a ceramic material, or the surfaces of the perforated disks (11, 12), which surfaces face each other, are provided with a ceramic coating.

4. The valve meter connector according to any one of the preceding claims, **characterized in that** on the outside of the measuring capsule receptacle (3), a profiling (20) is provided for the engagement of a tool and/or for manually gripping the measuring capsule receptacle.

5. The valve meter connector according to claim 4, **characterized in that** the profiling (20) is provided on a ring-shaped projection (19) on the outside of the measuring capsule receptacle (3), which projection has a greater diameter than the connecting piece (2).

6. The valve meter connector according to any one of the preceding claims, **characterized in that** projections (21) are provided on the connecting piece (2) and the measuring capsule (3), which projections limit a rotation of the connecting piece (2) relative to the measuring capsule receptacle (3) to approximately 90º.

7. The valve meter connector according to any one of the preceding claims, **characterized in that** the measuring capsule receptacle (3) is rotatably accommodated in the connecting piece (2) and is retained therein in an axially non-displaceable manner by means of a circlip (10) .

## Revendications

1. Raccord pour compteur d'eau comprenant une tubulure (2) contenant deux canaux d'écoulement (8, 9) séparés l'un de l'autre qui présente à une première extrémité des éléments de raccord pour le raccordement à un adaptateur de clapet (4) qui est relié à une conduite d'amenée et d'évacuation et contient deux canaux, et est relié à une autre extrémité à une réception de capsule de mesure (3) en rotation l'un par rapport à l'autre sur un axe commun et bloqué dans la direction axiale, laquelle présente à son tour des éléments de raccord pour le raccordement à une capsule de mesure (5) et ses conduites d'amenée et d'évacuation, sachant qu'un premier disque percé (11) comprenant au moins deux ouvertures de passage (16a, 16b) et orienté vers la réception de capsule de mesure (3), fixe en rotation et étanchéifié, est reçu dans la tubulure (2) et qu'un second disque percé (12) comprenant au moins deux ouvertures de passage (16a, 16b) et orienté vers la tubulure (2), fixe en rotation et étanchéifié, est reçu dans la réception de capsule de mesure (3) de telle façon que les deux disques percés (11, 12) reposent l'un sur l'autre de façon coaxiale et en étanchéité, sachant qu'un tube de clapet coudé (7) relié à une des ouvertures de passage (16b) du premier disque percé (11) et aux premiers éléments de raccord de la première extrémité de la tubulure (2) passe dans la tubulure (2), sachant que la tubulure (2) présente une ouverture (6) sur la première extrémité dans laquelle le tube de clapet coudé (7) débouche, qui définit le premier canal d'écoulement (8) des deux canaux d'écoulement (8, 9) séparés l'un de l'autre, et sachant que l'intérieur de la tubulure (2) forme le second canal d'écoulement (9) des deux canaux d'écoulement (8, 9) séparés l'un de l'autre.

2. Raccord pour compteur d'eau selon la revendication 1, **caractérisé en ce que** l'écoulement est dévié de moins de 90° jusqu'à l'entrée dans la capsule de mesure (5), de préférence deux fois d'environ 20° dans le tube de clapet (7).

3. Raccord pour compteur d'eau selon l'une des revendications précédentes, **caractérisé en ce que** les deux disques percés (11, 12) sont en matériau céramique ou bien les faces orientées l'une vers l'autre des disques percés (11, 12) sont dotées d'un revêtement céramique.

4. Raccord pour compteur d'eau selon l'une des revendications précédentes, **caractérisé en ce qu'**un profilé (20) pour mettre en prise un outil et/ou pour saisir manuellement la réception de capsule de mesure, est prévu sur le côté extérieur de la réception de capsule de mesure (3).

5. Raccord pour compteur d'eau selon la revendication 4, **caractérisé en ce que** le profilé (20) est disposé sur une saillie (19) annulaire sur le côté extérieur de la réception de capsule de mesure (3), qui présente un diamètre plus grand que celui de la tubulure (2).

6. Raccord pour compteur d'eau selon l'une des revendications précédentes, **caractérisé en ce que** des saillies (21) sont prévues sur la tubulure (2) et la réception de capsule de mesure (3), lesquelles délimitent d'environ 90° une rotation relative de la tubulure (2) par rapport à la réception de capsule de mesure (3).

7. Raccord pour compteur d'eau selon l'une des revendications précédentes, **caractérisé en ce que** la réception de capsule de mesure (3) est reçue de façon à pouvoir tourner dans la tubulure (2) et est maintenue dans celle-ci en étant bloquée dans la direction axiale via un circlip (10).
